# EUROPÄISCHE PATENTSCHRIFT

(11) **EP 0 519 315 B1**
(45) Veröffentlichungstag und Bekanntmachung des Hinweises auf die Patenterteilung: **05.04.1995**
(21) Anmeldenummer: 92109802.6
(22) Anmeldetag: 11.06.1992
(51) Int. Cl.: F41G 3/08, G01W 1/08

(54) **Einrichtung zur Messung des Höhenprofils eines Bodenwindes**
Device for measuring the height profile of a ground wind
Dispositif pour mesurer le profil en hauteur d'un vent au sol

(30) Priorität: 20.06.1991 DE 4120367
(43) Veröffentlichungstag der Anmeldung: 23.12.1992
(73) Patentinhaber: DIEHL GMBH & CO., 90478 Nürnberg (DE)
(72) Erfinder: Rentzsch, Max, W-8563 Schnaittach (DE); Schreier, Johann, Dr., W-8501 Rückersdorf (DE); Steuer, Raimar, W-8566 Diepersdorf (DE)

(56) Entgegenhaltungen:
- EP-A- 0 261 091
- CH-A- 344 336
- DE-A- 2 455 341
- US-A- 3 862 584
- PATENT ABSTRACTS OF JAPAN vol. 015, no. 318 (M-1146)14. August 1991 &JP-A-3 117898 (MITSUBISHI CORP.)20.Mai 1991

## Beschreibung

Zur Messung des Höhenprofils eines Bodenwindes, der bis in einige hundert Meter Höhe über dem Boden vorhanden ist, kommen bislang insbes. Wetterballons zur Anwendung, deren Aufstiegs- bzw. Flugbahn bspw. mittels eines Radar-, Laser- oder Infrarotstrahles einer entsprechenden Strahlenquelle verfolgt wird. Eine derartige Strahlenquelle ist teuer.

Für die Treffgenauigkeit von ungelenkten ballistischen Raketen bzw. von Geschossen ist von entscheidender Bedeutung, daß das sog. Windprofil in Bodennähe bekannt ist. Der Begriff Bodennähe bedeutet einige wenige bis einige hundert Meter Höhe über der Abschußstelle der besagten Rakete bzw. des Geschosses. Zur Bestimmung des Windprofiles in Bodennähe kommen bislang bspw. Laser-Anemometer zur Anwendung, welche die Luftbewegung in verschiedenen Höhen messen. Dieses Verfahren ist jedoch aufwendig.

Aus der WO 90/08 936 ist ein Verfahren und eine Vorrichtung zur Verbesserung der Treffgenauigkeit von Geschossen einer Schießanlage bekannt. Mit einer Vermessungseinrichtung werden hierbei die Flugbahnen von Pilotgeschossen vermessen. Die so ermittelten Pilot-Flugbahnen werden zur Korrektur der Schießelemente der Wirkgeschosse herangezogen. Dabei wird mindestens ein Pilotgeschoß in Richtung möglicher bzw. bekannter Ziele abgefeuert. Aus der mindestens einen Pilotflugbahn werden die die Flugbahn beeinflussenden vorgegebenen Parameter berechnet und gespeichert und in die Berechnung der Schießelemente mit einbezogen. Eine Verfahrensvariante ermittelt durch die Vermessung des Anfangs-Teilstückes der Geschoßflugbahn, d.h. durch die Vermessung der Startphase, allein den Abgangsfehler des Effektors, welcher in die Berechnung der Schießelemente einbezogen wird.

Die DE 39 32 878 A1 offenbart ein Verfahren zur Bestimmung und Änderung der Flugbahn von Geschossen, insbes. von mehreren Geschossen innerhalb eines Salvenschusses aus einem oder mehreren Rohren eines Geschützturmes o.dgl., wobei ein Ziel durch eine Feuerleitstelle vermessen und während des Fluges Lenkinformationen an des Geschoß gegeben werden. Hierbei wird eine Selektion der angegebenen Lenkinformationen durch das Geschoß selbst durchgeführt.

Der Erfindung liegt die Aufgabe zugrunde, eine Einrichtung zur Messung des Höhenprofils eines Bodenwindes zu schaffen, mit welcher eine einfache und zeitsparende, schnelle Bestimmung von atmosphärischen Einflüssen in Bodennähe möglich ist.

Diese Aufgabe wird bei einer Einrichtung der zuletzt genannten Art durch die Merkmale des kennzeichnenden Teiles des Anspruchs 1 gelöst. Bevorzugte Aus- und Weiterbildungen der erfindungsgemäßen Einrichtung sind in den Unteransprüchen gekennzeichnet.

Die erfindungsgemäße Einrichtung eignet sich insbes. zur Verbesserung der Treffergenauigkeit von Artilleriegeschossen bzw. ungelenkter ballistischer Raketen, wobei die Einrichtung vorzugsweise mit einer Feuerleitstelle der Geschosse bzw. Raketen wirkverbunden ist. Desgleichen ist es möglich, die erfindungsgemäße Einrichtung zur Messung meterologischer Daten, d.h. bspw. als Ersatz für Wetterballons zu verwenden.

Mit der erfindungsgemäßen Einrichtung werden die Vorteile erzielt, daß keine aufwendige Informations-Übertragungsstrecke erforderlich ist, daß die Einrichtung preisgünstiger als eine entsprechende Laser-, Radar- oder Infrarot-Bahnverfolgungseinrichtung ist, daß die Einrichtung ein autonomes Meßsystem bildet, daß die Bildverarbeitung infolge der im sichtbaren Wellenbereich wirkenden Optikeinrichtung vergleichsweise einfach ist, und daß die erfindungsgemäße Einrichtung schnell und universell einsetzbar ist.

Weitere Einzelheiten, Merkmale und Vorteile ergeben sich aus der nachfolgenden Beschreibung eines in der Zeichnung schematisch dargestellten Ausführungsbeispieles der erfindungsgemäßen Einrichtung und ihrer Wirkungsweise. Es zeigen:
- Fig. 1: eine teilweise aufgeschnittene räumliche Darstellung der Einrichtung, und
- Fig. 2: die Flugbahn eines Meßkörpers in dreidimensionaler Darstellung und die entsprechende Flugbahn in Projektion auf die Bildebene der Optikeinrichtung.

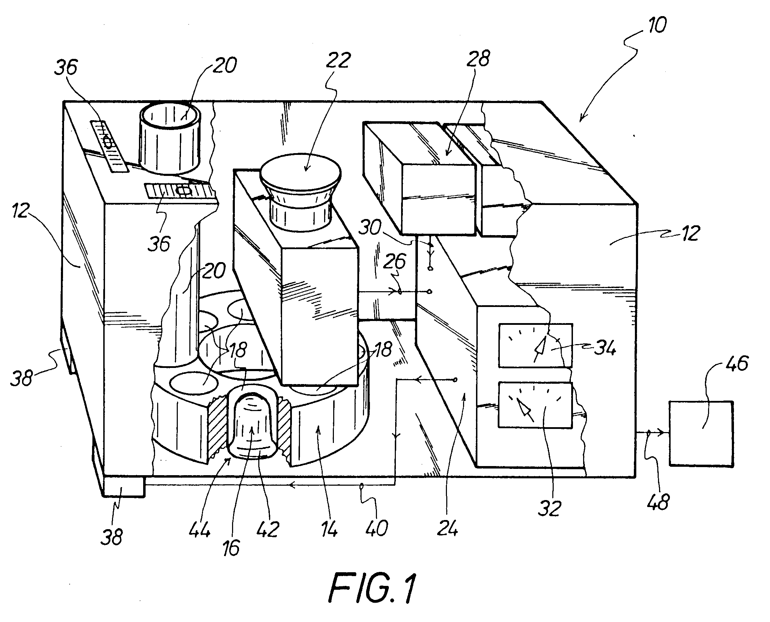

Fig. 1 zeigt teilweise aufgeschnitten die Einrichtung 10 zur Messung des Höhenprofils eines Bodenwindes, die in einem Gehäuse 12 eine (teilweise aufgeschnitten gezeichnete) Magazineinrichtung 14 für eine Anzahl Meßkörper 16 aufweist. Die drehbare Magazineinrichtung 14 ist mit Aufnahmeräumen 18 für die einzelnen Meßkörper 16 ausgebildet. Der Magazineinrichtung 14 ist ein Startrohr 20 zugeordnet, durch welches der entsprechende Meßkörper 16 aus der Einrichtung 10 mindestens annähernd vertikal nach oben abfeuerbar ist.

In unmittelbarer Nachbarschaft des Startrohres 20 ist im Gehäuse 12 der Einrichtung 10 eine Optikeinrichtung 22 vorgesehen, mit welcher der aus dem Startrohr 20 abgefeuerte Meßkörper 16 während seiner Aufwärtsbewegung verfolgt wird. Mit der Optikeinrichtung 22 ist eine Auswerteelektronikeinrichtung 24 wirkverbunden, was durch die Pfeillinie 26 angedeutet ist. Die Auswerteelektronikeinrichtung 24 ist mit einer Stromversorgungseinrichtung 28 verbunden, was durch die Pfeillinie 30 verdeutlicht wird. Die Auswerteelektronikeinrichtung 24 kann mit Anzeigeinstrumenten 32, 34 ausgerüstet sein, mit welchen z.B. die Windstärke und die Windrichtung in Abhängigkeit von der jeweiligen Höhe des aus dem Startrohr 20 abgefeuerten Meßkörpers 16 angezeigt wird.

Am Gehäuse 12 der Einrichtung 10 können Nivellierorgane 36 vorgesehen sein, um die Einrichtung 10 exakt in eine entsprechende Grundposition ausrichten zu können.

Um die Einrichtung 10 bzw. eine Starteinrichtung für ein Geschoß automatisch in eine durch die jeweiligen Windverhältnisse bedingte Position ausrichten zu können, ist es vorteilhaft, wenn die Einrichtung 10 mit Ausrichtorganen 38 ausgebildet ist, die mit der Auswerteelektronikeinrichtung 24 wirkverbunden sind, was durch die Pfeillinie 40 verdeutlicht werden soll. Durch eine solche Ausbildung ist es möglich, die Einrichtung 10 gegebenenfalls entsprechend der Flugbahn des Meßkörpers nachzuführen.

Nachdem drei Punkte eine Ebene bestimmen, ist es gegebenenfalls ausreichend, die Einrichtung 10 mit zwei voneinander räumlich getrennten Ausrichtorganen 38 zu versehen, die an der Unterseite des Gehäuses 12 vorgesehen sind. Selbstverständlich ist es auch möglich, mehr als zwei Ausrichtorgane 38 vorzusehen.

Jeder Meßkörper 16 ist vorzugsweise mit einem Antrieb 42 ausgebildet, bei dem es sich z.B. um einen pyrotechnischen Antrieb, um einen Gasantrieb o.dgl. handelt. Im Heckbereich 44 jedes Meßkörpers 16 ist vorzugsweise ein (nicht gezeichnetes) Zielspurelement vorgesehen, um die Bewegungsbahn des entsprechenden Meßkörpers 16 mit der Optikeinrichtung 22 zuverlässig verfolgen und die gemessenen Daten über die Wirkverbindung 26 in die Auswerteelektronikeinrichtung 24 eingeben zu können. Die Auswerteelektronikeinrichtung 24 der Einrichtung 10 kann mit einer nur durch einen Block angedeuteten Feuerleitstelle 46 wirkverbunden sein. Diese Wirkverbindung ist durch die Pfeillinie 48 angedeutet.

Nachdem die einzelnen Meßkörper 16 zeitlich aufeinanderfolgend von der Einrichtung 10 lotrecht nach oben abgefeuert werden, kehren die einzelnen Meßkörper 16 auch wieder in die Nachbarschaft der Einrichtung 10 zurück, so daß es zweckmäßig sein kann, die Meßkörper 16 mit einer (nicht gezeichneten) Bergungseinrichtung auszubilden, bei welcher es sich um einen Fallschirm oder um eine andere geeignete Bremsvorrichtung handeln kann.

Bei der Einrichtung 10 handelt es sich zweckmäßigerweise um ein mobiles Gerät, das tragbar sein kann und bspw. an einem geeigneten Fahrzeug fest montierbar ist. Die Einrichtung 10 kann manuell oder automatisch in die erforderliche Position ausgerichtet werden. Damit läßt sich das Windprofil, d.h. die Windstärke und die Windrichtung in Abhängigkeit von der jeweiligen Höhe relativ zur Einrichtung 10 bestimmen.

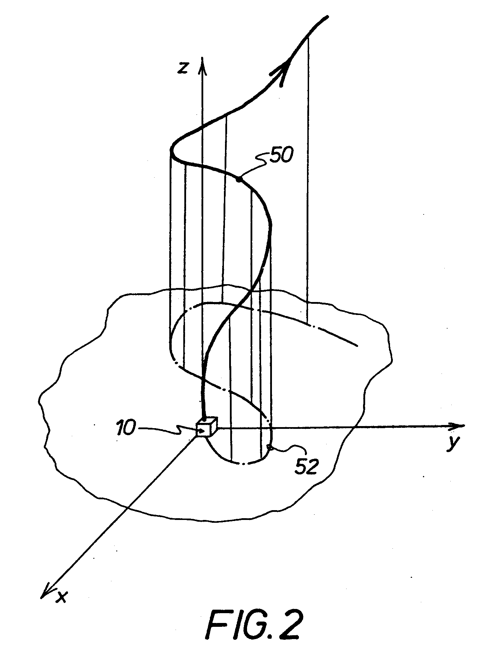

Fig. 2 verdeutlicht in einem kartesischen Koordinatensystem x, y und z die sich infolge Windeinfluß räumlich ändernde Flugbahn 50 eines Meßkörpers 16, der aus einer im Koordinatenursprung befindlichen Einrichtung 10 in Richtung der Koordinate z vertikal nach oben abgefeuert wird, und der durch die jeweiligen Windverhältnisse, d.h. entsprechend der Windstärke und der Windrichtung in Abhängigkeit von der Höhe z ausgelenkt wird, d.h. aus der Sollinie z abdriftet. Mit der Bezugsziffer 52 ist die Projektion der räumlichen Flugbahn 50 des Meßkörpers 16 in die Bildebene der Optikeinrichtung 22, d.h. in die x/y-Ebene verdeutlicht. Die Auswerteelektronikeinrichtung 24 (sh.Fig.1) errechnet aus der Abdrift des entsprechenden Meßkörpers 16 und der jeweiligen Flughöhe proportionalen Zeit das sog. Windprofil. Mit dieser Information kann die Berechnung eines Feuerkommandos für Raketen bzw. Geschosse aller Art durchgeführt werden, um deren Treffgenauigkeit auf einfache Weise zu verbessern.

## Patentansprüche

1. Einrichtung zur Messung des Höhenprofils eines Bodenwindes,
**dadurch gekennzeichnet**,
daß die Einrichtung (10) mindestens einen zumindest annähernd vertikal abfeuerbaren Meßkörper (16) und eine zur Bestimmung der windbedingten Abdrift des aus der Einrichtung (10) abgefeuerten Meßkörpers (16) vorgesehene Optikeinrichtung (22) aufweist, die mit einer zur Bestimmung des aus der Abdrift resultierenden Windprofils vorgesehenen Auswerteelektronikeinrichtung (24) verbunden ist.

2. Einrichtung nach Anspruch 1,
**dadurch gekennzeichnet**,
daß die Einrichtung (10) zu ihrer automatischen Ausrichtung mit Ausrichtorganen (38) ausgebildet ist, die mit der Auswerteelektronikeinrichtung (24) wirkverbunden sind.

3. Einrichtung nach Anspruch 1,
**dadurch gekennzeichnet**,
daß eine Anzahl Meßkörper (16) vorgesehen sind, die zeitlich aufeinanderfolgend von der Einrichtung (10) abfeuerbar sind.

4. Einrichtung nach Anspruch 3,
**dadurch gekennzeichnet**,
daß die Meßkörper (16) in einer Magazineinrichtung (14) vorgesehen sind, welcher ein mindestens annähernd vertikal orientiertes Startrohr (20) zugeordnet ist.

5. Einrichtung nach einem der vorhergehenden Ansprüche,
**dadurch gekennzeichnet**,
daß der/jeder Meßkörper (16) mit einem Antrieb (42) versehen ist.

6. Einrichtung nach einem der vorhergehenden Ansprüche,
**dadurch gekennzeichnet**,
daß der/jeder Meßkörper (16) in seinem Heckbereich (44) ein optisches Zielspurelement aufweist.

7. Einrichtung nach einem der vorhergehenden Ansprüche,
**dadurch gekennzeichnet**,
daß der/jeder Meßkörper (16) mit einer Bergungseinrichtung versehen ist.

8. Verwendung der Einrichtung nach einem der Ansprüche 1 bis 7 zur Verbesserung der Treffergenauigkeit von Artilleriegeschossen bzw. von ungelenkten ballistischen Raketen, wobei die Einrichtung mit einer Feuerleitstelle der Geschosse bzw. Raketen wirkverbunden ist.

9. Verwendung der Einrichtung nach einem der Ansprüche 1 bis 7 zur Messung meterologischer Daten.

## Claims

1. Apparatus for measuring the height profile of a ground wind, characterised in that the apparatus (10) has at least one measuring device (16), which may be fired at least approximately vertically, and an optical system (22) provided to determine the drift of the measuring device (16) fired from the apparatus (10) as a result of the wind, said optical system (22) being connected to an electronic evaluation system (24) provided to determine the wind profile resulting from said drift.

2. Apparatus according to Claim 1, characterised in that for automatic alignment of the apparatus (10), it is provided with alignment elements (38) which act in association with the electronic evaluation system (24).

3. Apparatus according to Claim 1, characterised in that a number of measuring devices (16) are provided which may be fired one after the other from the apparatus (10).

4. Apparatus according to Claim 3, characterised in that the measuring devices (16) are provided in a magazine arrangement (14) allocated to a firing tube (20), which is at least approximately vertically oriented.

5. Arrangement according to one of the preceding claims, characterised in that the/each measuring device (16) is equipped with a drive (42).

6. Apparatus according to one of the preceding claims, characterised in that the/each measuring device (16) has an optical tracking element in its rear region (44).

7. Apparatus according to one of the preceding claims, characterised in that the/each measuring device (16) is equipped with a recovery system.

8. Application of the apparatus according to one of Claims 1 to 7 for improvement of the target accuracy of artillery missiles or of non-guided ballistic rockets, wherein the apparatus acts in association with a fire-control point of the missiles or rockets.

9. Application of the apparatus according to one of Claims 1 to 7 for measurement of meteorological data.

## Revendications

1. Dispositif de mesure du profil en hauteur d'un vent au sol, caractérisé en ce que le dispositif (10) comporte au moins un corps de mesure (16) pouvant être tiré au moins approximativement verticalement et un dispositif optique (22) prévu pour déterminer la dérive due au vent du corps de mesure (10) tiré par le dispositif (10), lequel dispositif optique est relié à un dispositif électronique d'exploitation (24) prévu pour déterminer le profil du vent résultant de la dérive.

2. Dispositif selon la revendication 1, caractérisé en ce que le dispositif (10) comporte, pour son orientation automatique, des organes d'orientation (38) qui sont en liaison active avec le dispositif électronique d'exploitation (24).

3. Dispositif selon la revendication 1, caractérisé en ce qu'il est prévu un nombre de corps de mesure (16) qui sont successivement tirés par le dispositif (10).

4. Dispositif selon la revendication 3, caractérisé en ce que les corps de mesure (16) sont prévus dans un dispositif à magasin (14) auquel est associé un tube de lancement (20) orienté au moins à peu près verticalement.

5. Dispositif selon l'une des revendications précédentes, caractérisé en ce que le/chaque corps de mesure (16) est pourvu d'un mécanisme d'entraînement (42).

6. Dispositif selon l'une des revendications précédentes, caractérisé en ce que le/chaque corps de mesure (16) comporte, dans sa zone arrière (44), un élément optique de poursuite.

7. Dispositif selon l'une des revendications précédentes, caractérisé en ce que le/chaque corps de mesure (16) est pourvu d'un dispositif de récupération.

8. Mise en oeuvre du dispositif selon l'une des revendications 1 à 7, pour améliorer la précision du tir de projectiles d'artillerie ou de missiles balistiques non guidés, le dispositif étant en liaison active avec un point de guidage du tir des projectiles ou missiles.

9. Mise en oeuvre du dispositif selon l'une des revendications 1 à 7, pour la mesure de données météorologiques.
